# EUROPEAN PATENT APPLICATION

(11) **EP 1 389 827 A1**
(43) Date of publication of application: **18.02.2004**
(21) Application number: 03254428.0
(22) Date of filing: 11.07.2003
(51) Int. Cl.: H02K 19/10, H02K 19/20, H02P 7/05, H02P 9/48

(54) **Electrical machine**

(30) Priority: 09.08.2002 GB 0218549
(71) Applicant: ROLLS-ROYCE PLC, London, SW1E 6AT (GB)
(72) Inventor: Antonopoulos, George, Chellaston Derby DE73 1NL (GB); Cullen, John James Anthony, Chellaston Derby DE73 1WP (GB)
(74) Representative: Gunn, Michael Alan

(57) **Abstract**

A switched reluctance electrical machine comprising a salient pole stator (3,42,52), a salient pole rotor (2,43,53) and coils (4,41,56) wound on the stator poles. Each coil (4,41,56) includes a tap (T) or a number of taps (T) to alter the effective number of turns dependent on the speed of the rotor (2,43,53) in order to provide constant power or torque output over a wide range of operational speed.

## Description

The present invention relates to an electrical machine and more particularly to an electrical machine which is operated by switched reluctance.

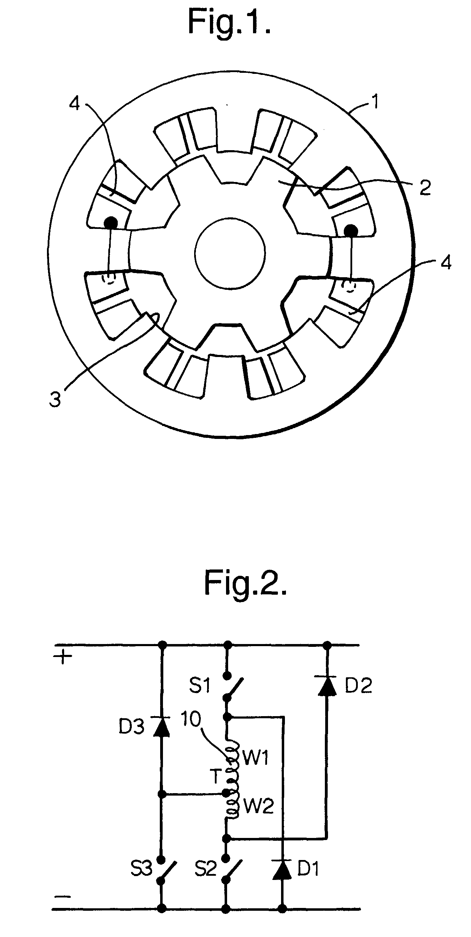

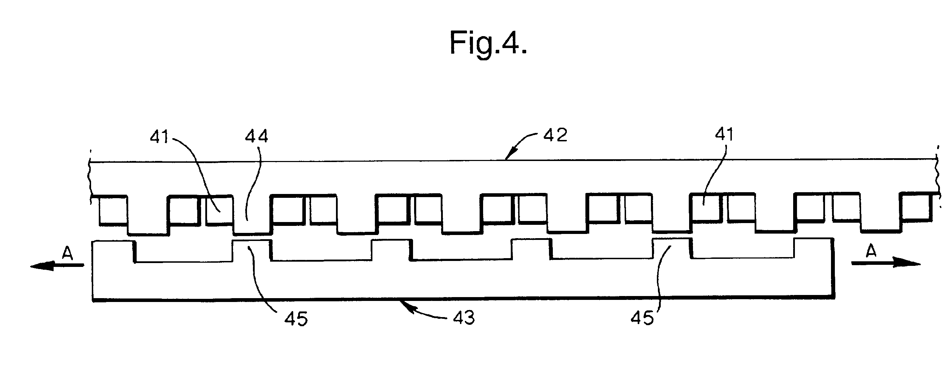

Electrical machines which use reluctance to drive a rotor are well known. Alternatively, mechanically driven rotation of the rotor can generate electricity in a generator configuration. Furthermore, electrical machines can be formed which involve linear motion rather than rotation. Typically, a switched reluctance machine comprises a salient pole stator with a number of coils arranged on it and a salient pole rotor (Fig. 1). An excitation current is switched into and out of its phases at controlled and precise intervals. In short, each phase is sequentially "fired" or energised in order to drive rotation of the rotor. Alternative geometries/topologies are shown in Figs. 4, 5 and 6.

Known switched reluctance machine theory of operation defines three distinct ranges of machine speed. A first range is from zero up to a so-called base speed. During this low speed range of operation the machine provides essentially constant electromagnetic torque as the electrical current applied to the coils is chopped by a converter to avoid over heating the windings. An intermediate operational range of speeds is then provided which extends from the base speed to an operational speed limited by the possibility of increasing the conduction angle, that is to say the time period during which each coil is "fired" in its appropriate phase. In the intermediate speed range there is a substantially constant power characteristic achieved by increasing the conduction angle as described previously. At higher speeds it is not possible to increase the conduction angle further and so peak current in the coils can no longer be achieved and machine power decreases more rapidly than the increase in machine speed. It should be appreciated that the motion between the poles of the electrical machine may be rotary or linear with the speed of that motion defined in operational ranges as described above.

It would be desirable to expand the operational speed range of a switched reluctance electrical machine.

In accordance with the present invention there is provided an electrical machine comprising a salient pole stator and a salient pole carrier along with a plurality of coils for association with magnetic means, the stator and the carrier configured to allow relative motion in use between the stator and carrier, each coil including at least one tap to alter the effective number of turns in that coil dependent upon the speed of relative motion between the carrier and the stator.

Typically, relative motion is due to appropriately energising the coils in sequence to provide an electrical motor. Alternatively, relative motion is due to an external mechanical force and the coils generate electricity to provide an electrical generator.

Typically, the motion will be rotary. Alternatively, the motion will be linear.

The magnetic means may be permanent or electro-magnetic assemblies.

Preferably, each tap is fixed. Typically, if there is only one tap, it will be arranged to reduce the effective number of turns in the coil.

Possibly, the taps are automatically adjusted relative to the carrier speed. Normally, a tap position in respect of the number of turns within each coil is the same for all coils. Possibly, each tap is adjustable relative to each coil by a manual adjustment or a historical adjustment performed at the end of a period of electrical machine operation dependent upon the carrier speeds during that period of operation or is adjustable through a control loop relative to current carrier speed. Additionally, the taps are adjustable dependent upon a sensor signal indicative of carrier speed. Possibly, the taps may be switched into operation through an inertia switch dependent upon carrier speed.

Preferably, the tap or taps in each coil are configured in order to allow a substantial speed range of typically 6 to 7 times the base speed within which the electrical machine provides essentially constant power. The more the number of turns per coil is reduced, the greater will be the speed range.

Embodiments of the present invention will now be described by way of example with reference to the accompanying drawings in which:
Fig. 1 is a schematic cross-section of a typical radial flux switched reluctance electrical machine;
Fig. 2 is a circuit diagram illustrating one of the taps present in a coil of an electrical machine;
Fig. 3 is a graphic representation illustrating the performance of a switched reluctance electrical machine;
Fig. 4 is a part schematic cross-section of a linear switched reluctance electrical machine;
Fig. 5 is a schematic cross-section of an axial flux topography switched reluctance electrical machine; and,
Fig. 6 is a schematic cross-section of a rotor for use with the mechanism depicted in Fig. 5.

Referring to Fig. 1 illustrating a schematic cross-section of a typical switched reluctance electrical machine 1. The machine 1 comprises a salient pole rotor 2 held within a salient pole stator 3 with a number of coils 4 secured to the stator poles. In use, a diametrically opposite pair of stator coils 4 is energised by an electrical current such that salient poles of the soft magnetic rotor 2 are driven into a rotary motion relative to and alignment with the coils 4 in the machine 1. This type of electrical machine is known as a switched reluctance machine and can be configured as a motor or a generator. It will be appreciated that coils and magnets are required for the electrical machine. The coils can be on the stator as illustrated and magnets on the rotor 2 or carrier or vice versa with the coils on the rotor/carrier and the magnets on the stator. The magnets may be permanent or electromagnets. It is preferred that the coils are on the stator as it is easier to supply electrical current and to assemble the machine. There is a relatively narrow air gap between the rotor 2 and the stator poles 3 in order to maximise interaction. Alternatively, the conventional geometry shown in Fig. 1 may be altered with the rotor arranged outside of the stator. In this alternative or "inside out" geometry the stator poles face radially outwardly and the rotor poles face radially inwardly. With a generator the rotor/carrier is moved by an external driving force relative to the stator to generate electricity in the coils. With a motor electrical supply current is applied to the coils, whether they be on the rotor/carrier or the stator, in order to move the rotor/carrier relative to the stator.

The coils 4 essentially comprise turns of typically copper wire. Thus, to a first approximation the inductance in each coil 4 is given by a combination of a constant dependent upon coil geometry, rotor position, material properties and the square of the number of turns in the coil 4. It can be shown that at high speed the electromagnetic torque provided by the electrical machine 1 is inversely proportional to the square of the frequency or rotational speed of the rotor 2 provided supply voltage is held constant. Thus, the number of turns in the coil is related to the torque provided by the electrical machine 1. In such circumstances, in order to increase the maximum speed/frequency of the electrical machine at which a given torque can be produced it is substantially necessary to keep the frequency multiplied by (number of turns)² product as a constant. For example, in order to double the maximum speed at which a given torque can be produced it is necessary to halve the (number of turns)2, i.e. reduce the number of turns by about 30%. Alternatively, if the objective is to maintain constant power at high speed then as power is proportional to the product of torque and frequency, it is necessary to substantially maintain the product of frequency multiplied by (number of turns) ⁴ as a constant. For example, to double the speed at which a given power can be produced it is necessary to halve the (number of turns)⁴, that is to say reduce the number of turns by approximately 15%. It will be appreciated that at high speeds due to the inductance of the coils 4 the electrical current applied to each coil does not have time to rise to its rated peak current value and so there will be no over heating of the insulation due to the reduced number of turns in the coil for the same torque or power output.

Referring to Fig. 2 illustrating a circuit diagram in which a coil 10, equivalent of a pair of diametrically opposite coils 4 in Fig. 1, is controlled in accordance with the present invention. In short, the number of turns in the coil 10 which are effective in the electrical machine is reduced at higher rotary speeds. A tap T is positioned in the coil 10 in order that at the appropriate rotary speed a portion W2 of the coil 10 is isolated and becomes ineffective in the electrical machine.

The tap T in the coil 10 is probably arranged so that the portion W2 of the coil 10 isolated is that closest to the air gap between the rotor 2 and the stator pole tips 3 in the electrical machine 1. Thus, at high speeds that part of the coil closest to the air gap carries no transport current. In such circumstances, this portion W2 which potentially experiences the highest AC to DC resistance ratio is isolated out of the circuit and so does not contribute to the electrical loop or transport current copper loss in the coil 4 during operation although it can be the seat of eddy current loss.

Typically, each coil 10 will incorporate at least one tap T to allow only a proportion W1 of the coil 10 to be connected to the electrical source for energising in order to drive the rotor. More than one tap T is normally provided such that the proportion of the coil 10 effective is varied dependent upon incremental changes in the machine speed and so maintains substantially the same torque or power output. Alternatively, the tap T may slide relative to the coil 10 in order to vary the effective number of windings in that coil 10 relative to rotor speed.

The tap T reduces the inductance of the turns in the coil 10 in order to allow a converter supplying electrical current to supply the high speed [current is higher at low speed] peak current to the coils at high speed. The effect of this variation is to allow achievement of constant power or torque over a wider speed range than previously. Typically, a previous electrical machine could for example have a base speed of approximately 3,100 rpm and can maintain constant power up to approximately 8,000 rpm giving a speed range of 2.5:1 of the base speed. For example, with an electrical machine including coils 10 having taps T in accordance with the present invention the machine's constant power speed range is extended possibly to 20,000 rpm dependent upon mechanical suitability which gives an effective speed range of 6.5:1 of the base speed.

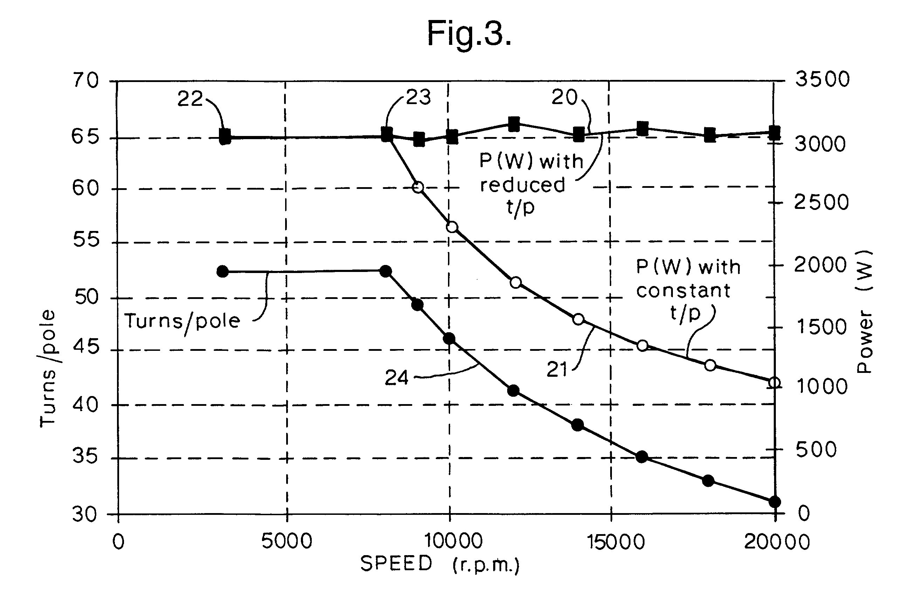

Fig. 3 is a graphic representation illustrating the performance of a switched reluctance electrical machine in accordance with the present invention in comparison with the results of a conventional switched reluctance electrical machine. Line 20 illustrates the power in Watts from an electrical machine in accordance with the present invention whilst line 21 illustrates the power from an electrical machine in which there is a constant number of turns in the coils of the machine. It can be seen that the lines 20 and 21 are substantially the same from the base speed 22 through an intermediate speed range to an intermediate speed limit 23. At the limit 23, the present invention in terms of the tap acts to alter the number of turns effectively operational in each of the coils in order to substantially render the power output constant over a wider range of speeds depicted by line 20. Line 21 diverges from line 20 at the intermediate speed limit 23 and it will be seen that the power of the conventional machine rapidly reduces with increasing speed.

Line 24 illustrates the number of effective turns in the coils. Thus, up to the intermediate speed limit 23 the same number of turns are effective in the coil whilst above this speed limit 23 the number of effective turns is progressively reduced. It will be appreciated that this variation requires automatic variation in the number of turns available. Alternatively, the number of turns available may be limited to two distinct values such that the tap is fixed relative to the coil and the benefits of power maintenance are achieved over a wide range of speeds provided there is an adjustment of the firing angles by the control system to accommodate the different number of turns effective in the period during which electrical current is applied to the coil as described above.

The number of taps T in each coil needed depends on how much the speed range needs to be extended. Generally, the bigger the speed range the more taps are required to keep the power constant. Within the speed range between tap changes, it is possible to regulate the power by controlling the peak winding current from the converter.

Progressive change in the number of turns available in each coil may be difficult to implement practically and so providing discrete integral step changes in the number of turns available may be more convenient. Nevertheless, Fig. 3 shows that in this example from a base speed of approximately 3000 rpm up to a speed of 20,000 rpm the power output can be substantially rendered constant.

In Fig. 2 the coil 10 has a single tap T and this is associated with converter switches S1, S2, S3 and diodes D1, D2 and D3. For normal operation i.e. up to the intermediate speed limit 23 (Fig. 3) all of the turns in the coil 10 (W1+W2) carry electrical current and the converter switches S1 and S2 are used to control supply of that current to the coil 10. In accordance with the present invention at a higher speed, that is to say beyond the intermediate speed limit 23 (Fig. 3), converter switch S2 is opened such that only the turns in portion W1 of the coil 10 carry current and so are energised in order to drive the rotor of the electrical machine. Electric current presented through portion W1 of the coil 10 is controlled by converter switches S1 and S3 with a tap T appropriately located within the coil 10 in order to limit the effective number of turns available in that coil 10.

The unexcited or isolated portion W2 of the coil 10 as indicated previously is normally that part of the coil 10 which is closest to the air gap between the rotor and the stator poles. In such circumstances, the portion W2 when isolated and not carrying transport electrical current will not contribute to the electrical transport current copper loss which relieves a potentially significant problem with higher speed operation although eddy currents may be present in portion W2.

As indicated previously, the point at which the tap T is brought into operation in order to isolate portion W2 is dependent upon fall off of power or torque. Thus, a control mechanism may be provided which acts through monitoring the power output in a closed control loop in order to vary the position of the tap and its operation with respect to the coil 10. Alternatively, the predicted range of electrical machine operation is determined such that the cut-in speed for the tap is determined and in such circumstances the electrical machine speed is then monitored in order to effectively activate the tap at that predetermined speed. In such circumstances, a sensor for sensing rotor speed could be used or an inertia switch provided which activates the tap T at the desired speed.

Once activated the tap T could be fixed such that in association with varying the firing angle for each coil there is an extension of the operational range of the electrical machine for constant power output. Alternatively, the tap T could vary its effect upon the coil in order to alter the number of effective turns in the coil more specifically to the current electrical machine speed. Such variation could comprise a slide contact engaging the windings in succession in order to vary the number of effective turns in the coil 10. Slide movement of the tap could be achieved through an inertia displacement as a result of increasing speed.

The necessary position of a fixed tap or range of variation of a tap in a coil can be predicted mathematically or through an historical consideration of power output from the machine over a range of speeds such that the machine is tuned by varying the position of the tap or taps in order to change the number of effective turns at specific speeds. The tap could be manually set at the required positions or as indicated previously programmed to perform the necessary changes during operation of the electrical machine.

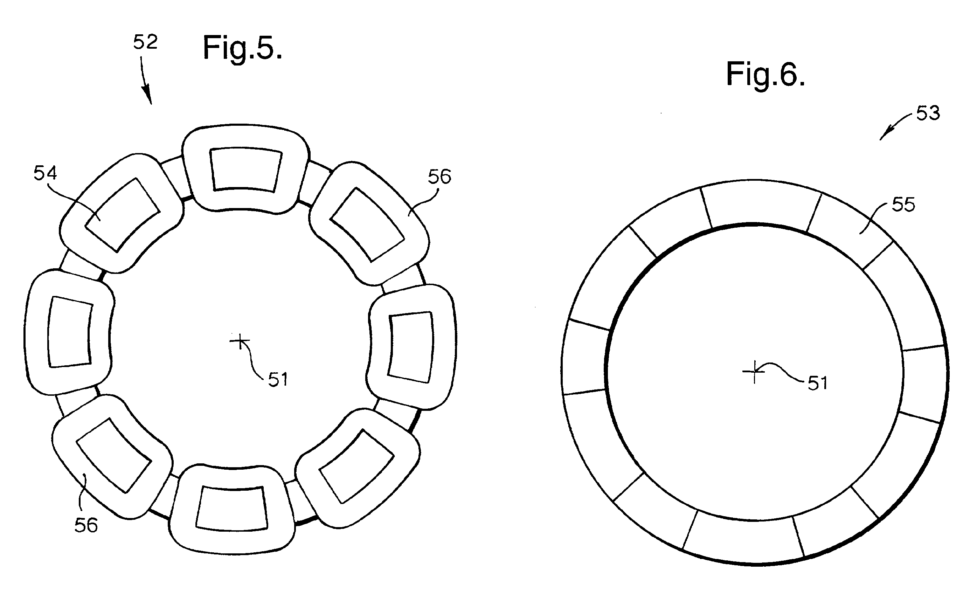

Figures 4 and 5 illustrate respectively linear and axial topologies or geometries for switched reluctance electrical machines which can be used in accordance with the present invention. These topologies or geometries may be used in order to provide an electrical machine with the desired performance or packaging criteria.

Fig. 4 depicts, in part-schematic cross-section, a linear switched reluctance electrical machine in which coils 41 are excited in pairs so as to draw poles 44 on a first beam member 42 into alignment with poles 45 on another beam member 43. By such sequential excitation of pairs of coils 41 relative linear motion between the members 42 and 43 is achieved. Typically this relative linear motion will be in oscillation about extremes of displacement by one member, in this case member 43. Thus, member 42 will be a fixed bed or stator whilst the member 43 oscillates in the direction of arrowheads A and acts as a carrier for its coils. The switching regime for excitation of coils 41 in appropriate pairs is similar to that described with regard to the rotary geometry depicted in Fig. 1. In such circumstances, as the displacement speed of relative linear motion between the members 42, 43 increases then if the number of turns in the coils 41 remains constant there will be a diminution in power. In accordance with the present invention a tap or taps associated with the coils 41 is arranged to alter the number of effective turns in each coil 41 such that power can be substantially maintained. It will be appreciated as a relative linear motion is provided between the members 42, 43 and that this motion will typically oscillate around extremities or end stops then the speed of the electric machine may vary. Normally, the displaced member 43 will slow as it approaches an extremity. This variation in speed may be accommodated by varying the actual tap in operation by switching between a plurality of taps available or through an automatic adjustment of tap position or providing taps which provide effectively different numbers of turns available in the coils 41 at or near the extremities of linear displacement. In such circumstances better control and maintenance of power may be achieved.

Figs. 5 and 6 illustrate an axial flux topology or geometry for a switched reluctance electrical machine within which the present invention can be incorporated. A stator 52 and a rotor 53 are mounted on a common axis 51 with the rotor poles 55 facing stator poles 54. Stator windings 56 are excited in pairs so as to draw rotor poles 55 into alignment with the excited stator poles 54. Thus, the rotor 53 acts as a carrier for its poles 55 and they are sequentially drawn into alignment to drive the machine. By such means rotary motion is produced. As previously if the number of turns in windings 56 remains the same at higher speeds there is a reduction in power. In accordance with the present invention a tap or taps is provided in each of the windings 56 in order that the effective number of turns in those windings 56 is altered in order to render power substantially constant over a wider range of operational speeds. The windings 56 are around the poles 54. The poles 54 extend axially and so the taps isolate turns towards the air-gap in order to provide the necessary reduction in inductance to allow substantially the same power.

A switched reluctance machine is always operated with a power electronics converter. The chief advantage of the present invention is that, for a given converter voltage and current rating, the switched reluctance machine's maximum speed for a given torque or power is considerably extended. Previously it was necessary to increase the converter current rating and/or its voltage rating, such changes had deleterious consequences for converter costs, system complexity and/or system losses.

Whilst endeavouring in the foregoing specification to draw attention to those features of the invention believed to be of particular importance it should be understood that the Applicant claims protection in respect of any patentable feature or combination of features hereinbefore referred to and/or shown in the drawings whether or not particular emphasis has been placed thereon.

## Claims

1. A switched reluctance electrical machine (1) comprising a salient pole stator (3,42,52) and a salient pole carrier (2,43,53) along with a plurality of coils (4,41,56) for association with magnetic means, the stator (3,42,52) and carrier (2,43,53) configured to allow relative motion in use between the stator (3,42,52) and carrier (2,43,53), **characterised in that** each coil (4,41,56) including a tap (T) to alter the effective number of turns **in that** coil (4,41,56) dependent upon the speed of relative motion between the carrier (2,43,53) and the stator (3,42,52).

2. A machine as claimed in claim 1 wherein the tap or taps (T) are fixed in terms of the effective number of turns in its coils (4,41,56).

3. A machine as claimed in claim 1 or claim 2 wherein the tap (T) is arranged to reduce the effective number of turns in its coils (4,41,56) by, typically, approximately a third of the total number of turns in that coil (4,41,56).

4. A machine as claimed in any preceding claim wherein the tap (T) is individually determined for each coil (4,41,56) of the plurality of coils (4,41,56) in terms of incremental spacing to alter the effective number of turns in its coil (4, 41, 56).

5. A machine as claimed in any preceding claim wherein the tap (T) is automatically adjusted relative to the carrier speed (2,43,53).

6. A machine as claimed in any preceding claim wherein the tap (T) is arranged to provide substantially the same effective number of turns in each coil (4,41,56) of the plurality of coils (4,41,56).

7. A machine as claimed in any preceding claim wherein the tap (T) is manually adjustable in terms of the effective number of turns in its coil (4,41,56).

8. A machine as claimed in any of claims 1 to 6 wherein the tap (T) is adjustable dependent upon historical performance of the machine (1) in terms of carrier speed (2,43,53).

9. A machine as claimed in any of claims 1 to 7 in which the tap (T) is adjustable through a control loop relative to the current carrier (2,43,53) speed.

10. A machine as claimed in any preceding claim wherein the tap (T) is switched into operation through an inertia switch dependent upon the carrier (2,43,53) speed.

11. A machine as claimed in any preceding claim wherein the tap (T) ensures that the number of turns effective in the coil (4,41,56) are those furthest from the stator pole tip.

12. A machine as claimed in any preceding claim wherein the torque or power output from that electrical machine (1) is substantially constant for a range of speed.

13. A machine as claimed in any preceding claim wherein the carrier (2,53) is a rotor.

14. A machine as claimed in any of claims 1 to 12 in which the carrier (43) is a linear beam.

15. A machine as claimed in any preceding claim wherein relative motion in use is due to appropriately energising the coils (4,41,56) in sequence to constitute an electric motor.

16. A machine as claimed in any of claims 1 to 15 wherein the relative motion in use is due to application of an external driving force in order to constitute an electric current generator.

17. A machine as claimed in any preceding claim wherein the magnetic means is permanent magnets or electro-magnetic assemblies configured in the carrier or stator.
